# EUROPEAN PATENT APPLICATION

(11) **EP 1 498 221 A2**
(43) Date of publication of application: **19.01.2005**
(21) Application number: 04013946.1
(22) Date of filing: 15.06.2004
(51) Int. Cl.: B23Q 17/00, B23Q 1/01, B23Q 37/00

(54) **System for designing, manufacturing and adjusting tooling for supporting mechanical parts on three-dimensional machine tools and process for operating such system**

(30) Priority: 26.06.2003 IT TO20030483
(71) Applicant: ITACA S.R.L., 10127 Torino (IT); MOD.EN S.R.L., 10090 Cascine Vica Rivoli (IT)
(72) Inventor: Raho, Guglielmo, 10127 Torino (IT)
(74) Representative: Garavelli, Paolo

(57) **Abstract**

A system and a process are disclosed for designing, manufacturing and adjusting tooling for supporting mechanic parts on three-dimensional machine tools; this system comprises tooling designing means, a supporting modular mechanic system, at least one adjustment terminal module (6) and at least one adjustment measuring head (7).

## Description

The present invention refers to a system for designing, quickly manufacturing and precisely adjusting tooling for supporting mechanical parts on three-dimensional machine tools and to a process for operating such system.

The prior art proposes tooling for supporting mechanical parts which substantially perform their functions according to two different modes. The first mode is a consolidated technique and it provides that the support of a mechanical part is realised by a matrix complementary to the piece itself: such complementary matrix is generally produced by milling of a block of appropriate material to provide it with the necessary shape. The use of complementary matrixes assures a good spatial positioning accuracy of the part to be supported, in particular if it is a non-rigid part; besides, the complementary matrixes have the further advantage of avoiding that remarkable distortions are caused to the mechanical piece during the supporting action. However, complementary matrixes have numerous disadvantages; in fact, they are expensive and they need a long workmanship; besides, every matrix obviously is usable with the mechanical part shaped thereon only and therefore it is aimed not to be recoverable and reusable with different parts; likewise, in the case in which some changes are made to the mechanical part, a new matrix must be realised with evident waste of time and resources.

The second mode provides for a support realised by supporting columns manually positioned by an operator in supporting points of the mechanical part; contrarily to the technique using the complementary matrixes, this technique has the advantage to be able to be configured on every module of the part to be supported and able to be modified to fit to different parts; the use of such columns involves however the introduction of a relative error component in positioning such columns by means of mechanical references to the three-dimensional machine tool, both because of the thrust caused by the operator on the chuck and because of the point in which it is repositioned is the column head, relatively far from the supporting point. Especially in case a support for a non-rigid part must be realised, such inaccuracy causes a not negligible deforming action on the same part. Besides, this technique obliges to precisely calibrate the whole terminal supporting group and to keep it assembled if it is provided to support the same piece again, substantially limiting the system modularity.

Moreover, the prior art does not provide for any system for making a supporting tooling which is integrated upstream with one its designing step depending on the specific part to be supported.

Object of the present invention is solving the aforesaid prior art problems by providing a system for designing, manufacturing and adjusting tooling for supporting mechanical parts on three-dimensional machine tools which allows a reduction of error components, induced by the deformations on the same part caused by tooling according to the prior art, by a modular supporting tooling having faster, more flexible and more economic tooling.

A further object of the present invention is providing a process for designing, manufacturing and adjusting tooling for supporting mechanical parts on three-dimensional machine tools which allows a reduction of error components, induced by the deformations on the same part caused by tooling according to the prior art, by a modular supporting tooling having faster, more flexible and more economic tooling.

A further object of the present invention is providing an automatic or aided designing software which, starting from the contact point between a supporting terminal module and the mechanical part to be supported, computes the position of a relative supporting point.

A further object of the present invention is providing an automatic and/or aided designing system of the composition of the terminal supporting group, of the column and of the raising elements of the same column.

Moreover, a further object of the present invention is providing a measuring head to be assembled on the machine tool to statically sense three errors related to a triad of orthogonal reference axes X, Y and Z for positioning a column terminal head.

A further object of the present invention is providing an adjustment terminal module whose spatial position measure serves for driving an operator in micrometric adjustments of the supporting tooling position.

Moreover, further objects of the present invention are providing centering systems, even of the not optic type, of an adjustment terminal module, a fine adjustment system of the position of a column terminal head and an adjustment method of the column terminal which involves the use of a static measuring head with the use of the machine tool positioned on previously computed points.

Moreover, an object of the present invention is providing a software to define, beginning from a contact point of a supporting terminal module, a module or a set of modules with which the supporting tooling has to be made.

Finally, a further object of the present invention is providing fine adjustable columns belonging to a modular system.

The aforesaid and other objects and advantages of the invention, as they will result by the following description, are reached with a system for designing, manufacturing and adjusting tooling for supporting mechanical parts on three-dimensional machine tools as described in Claim 1.

Moreover, the aforesaid and other objects and advantages of the present invention are reached with a process for designing, manufacturing and adjusting tooling for supporting mechanical parts on three-dimensional machine tools as described in Claim 27.

Preferred embodiments and non trivial variations of the present invention are the subject of the dependent claims.

The present invention will be better described by some preferred embodiments thereof, given as a non-limiting example, with reference to the enclosed drawings, in which:
- FIG. 1 shows a perspective view of an embodiment of a reconfigurable base frame according to the present invention;
- FIG. 2 shows a perspective view of an embodiment of a mobile transverse beam according to the present invention;
- FIG. 3 shows a perspective view of an embodiment of a fine adjustable column according to the present invention;
- FIG. 4 shows a schematic perspective view of an embodiment of a reference universal block according to the present invention;
- FIG. 5a shows a side view of an embodiment of a supporting terminal module according to the present invention;
- FIG. 5b shows a side view of another embodiment of a supporting terminal module according to the present invention;
- FIG. 6a shows a side view of an embodiment of an adjustment terminal module according to the present invention;
- FIG. 6b shows a side view of another embodiment of an adjustment terminal module according to the present invention;
- FIG. 7a shows a plant view of an embodiment of an adjustment measuring head provided with television cameras according to the present invention;
- FIG. 7b shows an image of an adjustment terminal module produced by a software on a display according to the present invention.

With reference to the Figures, the system for designing, manufacturing and adjusting tooling for supporting mechanical parts on three-dimensional machine tools according to the present invention is composed of:
- tooling designing means;
- a supporting mechanic modular system;
- at least an adjustment terminal module 6;
- at least an adjustment measuring head 7 for the measure of the position and for aiding the column terminal head 3c adjustment.

In particular, such tooling designing means is a graphic program managing the design of the supporting tooling, such program comprising the steps of:
- importing, if available, mathematical models representative of the mechanical part (not shown) to be supported;
- defining contact points on the mechanical part to be supported;
- aided defining, from a library of available modules, the components to be used for the manufacture of the supporting tooling;
- computing a list of supporting terminal points, herein below described;
- computing positioning coordinates of mobile transverse beams 2 and fine adjustable columns 3 according to a triad of orthogonal axes X, Y and Z to allow each supporting terminal point to correspond to the respective previously-defined contact point;
- computing a position related to a characteristic reference point 5d, described herein below, of the supporting terminal module 5;
- computing coordinates of a characteristic measure point 6c, described herein below, of an adjustment terminal module 6, described herein below;
- editing a report, aimed to guide an operator during the remanufacture of the supporting tooling, containing the following data:
   - a list of the necessary assembling parts of the single modules constituting the supporting tooling;
   - the position of each adjustable element in the supporting tooling;
   - indication of the heights related to the aforesaid positioning axes X, Y and Z of an adjustment measuring head 7;
   - indications on the assembling sequence of the various modules so that interference problems between the machine tool and the supporting tooling are automatically solved.

The supporting modular system according to the present invention is composed of a series of sectional standard modules adjustable in varying positions with indication of the relative positions through a suitable embedded measuring system (not shown) (i.e.: scales, verniers, transducers..).

Such supporting mechanic modular system is composed of:
- a reconfigurable base frame 1;
- at least two mobile transverse beams 2 disposed on the reconfigurable base frame 1 sliding along a longitudinal direction relatively to the aforesaid reconfigurable base frame 1 (direction related to a X axis);
- at least three fine adjustable columns 3 on the aforesaid mobile transverse beams 2 sliding along a transverse direction (direction relative to an Y axis orthogonal to the aforesaid X axis) and with adjustable height (direction relative to a Z axis orthogonal to the aforesaid X and Y axes); such fine adjustable column 3 incorporates fine adjustable modules 3a, 3b to adjust the position in three directions X, Y and Z with an adjustment range made fit to the measuring method of the position of the adjustment terminal module; besides such column 3 is provided with a terminal column head 3c on its end;
- a plurality of heads positioned on the aforesaid terminal column head 3c adapted to engage a supporting terminal group and/or a possible locking terminal group;
- a plurality of adjustable modules for changing the height of the fine adjustable column 3 (rises with calibrated height); and
- a plurality of modules constituting the supporting terminal group.

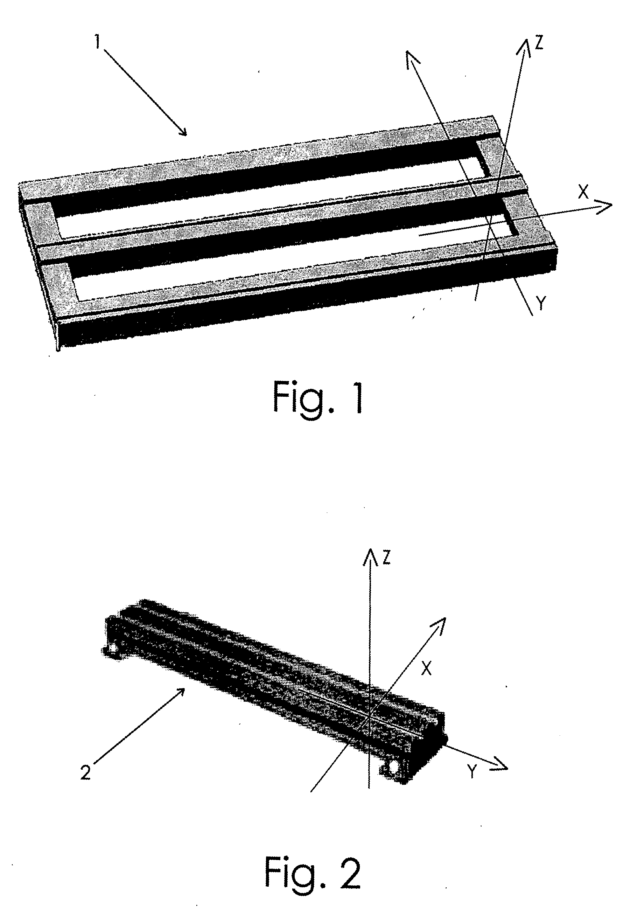

With reference to Fig. 1, it is possible to see that the reconfigurable base frame 1 is a supporting frame of the mobile transverse beam 1 and of the fine adjustable columns 3 of the supporting tooling according to the present invention, which allow positioning the aforesaid fine adjustable columns 3 in the reference points calculated by tooling designing means. The frame 1 can be realised, for example, as a trestle composed of aluminum bars with sliding rails for the mobile transverse beam, as a plan with a suitable grid of holes spaced with constant pitch or as a smooth plan with reference grid. In Fig. 1 it is also possible to see the triad of orthogonal reference axes X, Y and Z fixed as regards the reconfigurable base frame 1.

In Fig. 2 it is possible to see that the mobile transverse beam 2 is a crosspiece sliding on the reconfigurable base frame 1 and the fine adjustable column 3 slides thereon. In Fig. 1 it is also possible to see the triad of orthogonal reference axes X, Y and Z as regards the mobile transverse beam 2.

The mobile transverse beams 2 can be continuously positioned along X axis of the reconfigurable base frame 1, the position of the aforesaid beams 2 being sensed by a suitable optic, electric, electro-optic or magnetic transducer system (not shown). When in position, the mobile transverse beam 2 can be locked so that to withstand the efforts applied by the mechanical part supported by the supporting tooling according to the present invention.

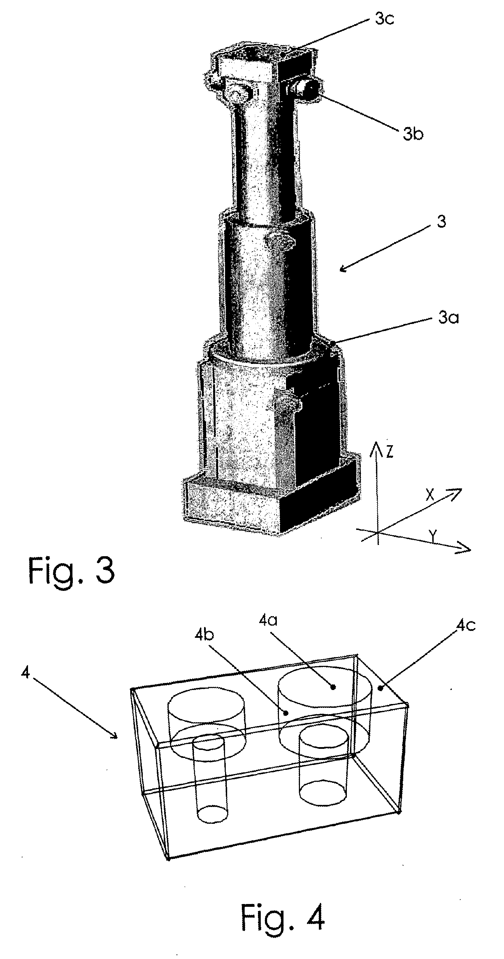

The fine adjustable column 3 is the main supporting module of the system according to the present invention. In Fig. 3 an embodiment of the fine adjustable column 3 is shown. The purpose of such column 3 is putting a column terminal head 3c, positioned on an end thereof, in the suitable position as regards the triad of orthogonal reference axes X, Y and Z. In order to obtain the aforesaid purpose, the fine adjustable columns 3 can transversely slide on the mobile transverse beams 2 (along the Y axis) and they can be adjusted in height (along the Z axis). The variation of position along the X axis is obtained by sliding the mobile transverse beams 2 on the reconfigurable base frame 1 along the X axis.

The fine adjustment of the column 3, by the fine adjustable modules 3a and 3b, allows accurately adjusting the position of the column terminal head 3c positioned on the end of the column 3 opposite to that positioned on the mobile transverse beams 2 as regards the triad of orthogonal reference axes X, Y and Z. The adjustment range can be limited to the uncertainty range given by the tooling remanufacturing means, described below.

The column terminal head 3c is provided with a set of accurate surfaces and hookings (hooking heads) on which it is possible to place some modules which will constitute the supporting terminal group and/or the locking terminal group.

The supporting terminal group is a set of modular elements which, starting from the column terminal head 3c, reaches the contact point on the part to be supported. Particularly, the supporting terminal group will have, as last elements, a reference universal block 4 and a supporting terminal module 5.

In Fig. 4, an embodiment of a reference universal block 4 according to the present invention is shown. The reference universal block 4 is the terminal module of the supporting terminal group and its purpose is to house, by a cylindrical hole 4b provided with fixing mechanic means 4d and according to the operational step, the adjustment terminal module 6 (during the tooling adjustment) or the supporting terminal module 5 during the tooling use. The reference universal block 4 releases a characteristic reference point 4a corresponding to analogous points of the supporting terminal modules 5d or of the adjustment terminal modules 6d, described below, as intersection of the cylindrical hole 4b axis with the upper plan 4c of the block 4 itself.

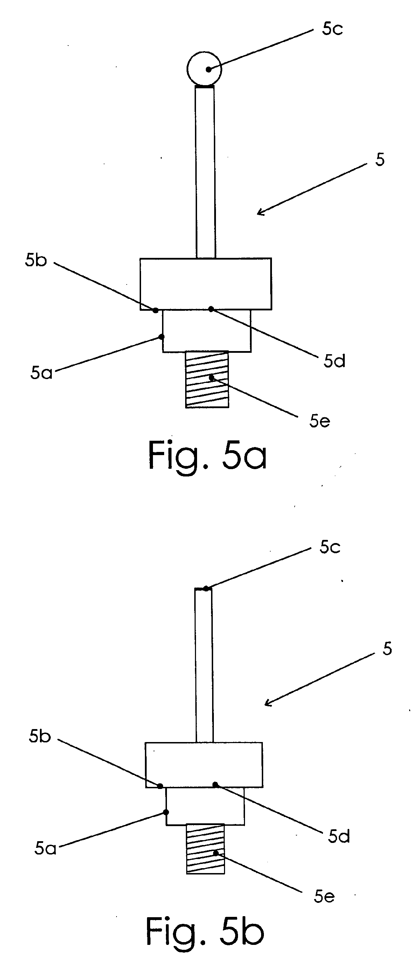

Figs. 5a and 5b show two embodiments of a supporting terminal module 5 according to the present invention; particularly, Fig. 5a shows a spherical supporting terminal module 5 and Fig. 5b shows a cylindrical supporting terminal module 5. The supporting terminal module 5 is an element composed of a sphere, a cylinder or another solid which comes into contact with the mechanical part in order to support it and to define its position with certainty. The supporting terminal module 5 fits in the reference universal block 4 by mechanic means 5e thereof which work with the fixing mechanic means 4d of the hole 4b, and they define its position and its lying with certainty as regards the block 4 itself. The positioning of the supporting terminal module 5 on the reference universal block 4 causes the coincidence of respective characteristic reference points 4a and 5d. The characteristic reference point 5d in the supporting terminal module 5 is defined, as a non-limiting example, by the intersection between the axis of a radial reference cylinder 5a and a plan composed of the axial reference abutment 5b.

The locking terminal group is a particular module or set of modules whose purpose is locking the mechanical part to be supported on the supporting terminal module 5, guaranteeing the correct contact between the two surfaces.

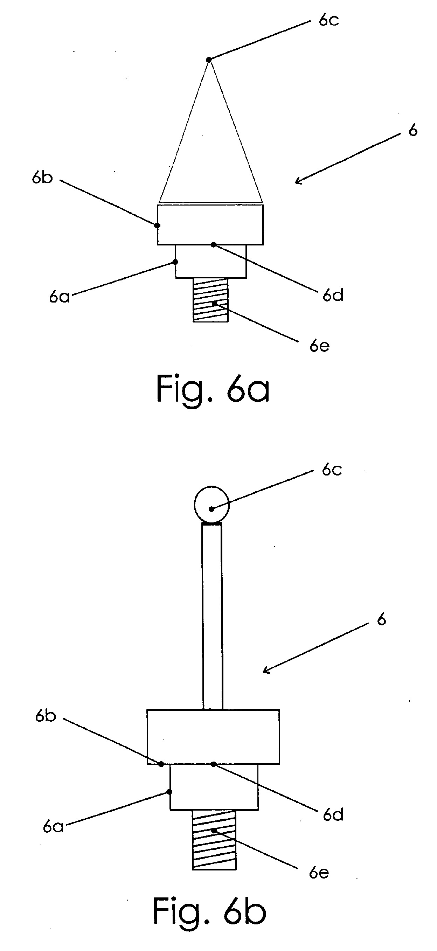

Figs. 6a and 6b show two embodiments of an adjustment terminal module 6 according to the present invention; particularly, Fig. 6a shows a conic adjustment terminal module 6 and Fig. 6b shows a spherical adjustment terminal module 6.

The adjustment terminal modules 6 are modules which are assembled in place of the supporting terminal modules 5 because they have mechanical, geometric, optical or electric characteristics suitable to facilitate the measure of its three-dimensional static position through a special adjustment measuring head 7, described below, placed on the measure tool. The assembling of an adjustment terminal module 6 on the terminal group occurs in the same way as the supporting terminal module 5, the two modules having characteristic reference points, respectively 6d and 5d, in identical position. Particularly, the adjustment terminal module 6 fits in the reference universal block 4 through mechanic means 6e thereof which work with the fixing mechanic means 4d of the hole 4b and they define its position and its lying with certainty as regards the reference universal block 4 itself. The positioning of the adjustment terminal module 6 on the reference universal block 4 causes the coincidence of the respective characteristic reference points 6d and 4a. The characteristic reference point 6d, as a non-limiting example, is defined by the intersection of the axis of the radial reference cylinder 6a with the lower abutment plan 6b of the adjustment terminal module 6 on the reference universal block 4. Every adjustment terminal module 6 has a characteristic measure point 6c which can be easily sensed by the measuring and adjustment head 7. As a non-limiting example, for the conic adjustment terminal module 6, shown in Fig,. 6a, the characteristic measure point 6c is located by the cone vertex, easily recognisable, in an image taken by a television camera, for whatever position of the cone. The use of various typologies of adjustment terminal module 6 can be assumed according to the principle used for the measuring head; as a non-limiting example, for an optic head provided with two television cameras (pseudo-stereo), an adjustment terminal module 6 is composed, as shown in Fig. 6a, of a cone with suitable sizes to be displayed with a strong enlargement, in compliance with the resolution of the maximum desired positioning error; for a head provided with linear measure sensors with contact (LVDT), an adjustment terminal module 6 is assumed that is composed, as shown in Fig. 6b, of a sphere placed on a stem with precision coupling; for a head provided with linear measure sensors without contact (capacitive or magnetic or optic with triangulation or interferometric sensors) a sphere of material and diameter conformed to the nature of the sensor, for example light-reflecting or light-diffusing or ferromagnetic or conductor, etc., will be used; the use of an active adjustment terminal module 6 and of a passive adjustment measuring head (not shown) can also be assumed. In this case, the adjustment terminal module 6 will contain the movement measure system while the adjustment measuring head on the machine tool will be the comparison surface.

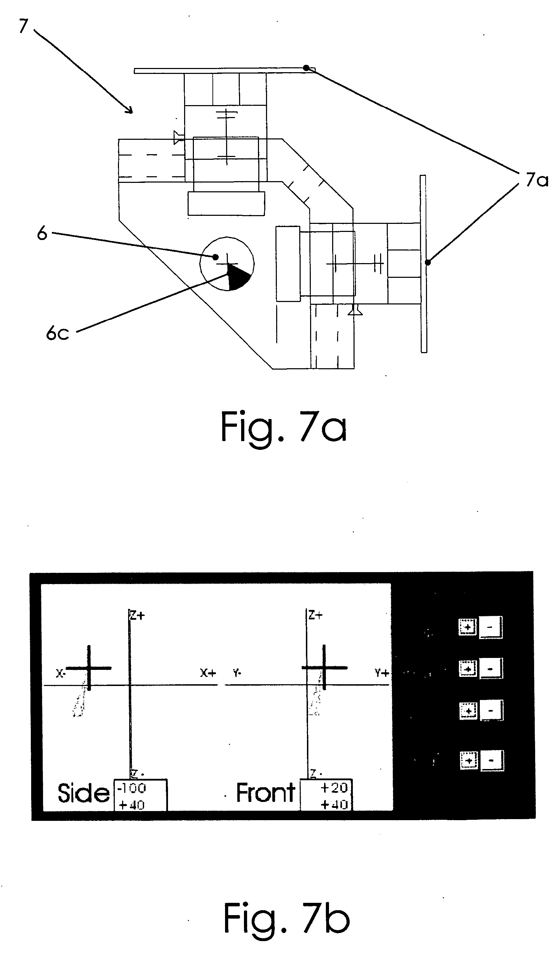

The adjustment measuring head 7 is a system composed of one or more optic, electric or mechanic sensors, able to measure or to show the suitably amplified three-dimensional deviation of the adjustment terminal module when the machine tool is positioned in the position reference point computed by tooling designing means. The adjustment measuring head 7 can be realised with various technologies. As a non-limiting example, in Fig. 7a an embodiment of an adjustment measuring head 7 is shown: in this embodiment, a system for the measure of the characteristic measure point 6c of the conic adjustment terminal module 6 is a light structure to be placed on the toolhead of the measuring tool. Two television cameras 7a are placed on the structure with the respective optic axes orthogonally disposed and with objectives able to transmit on a display 8 (Fig. 7b) connected thereon the cone vertex with a suitable magnification to be able to appreciate movements in the order of the desired residual error (for example, +/-0.02 mm).

To realise a process according to the present invention for designing, manufacturing and adjusting tooling for supporting mechanical parts on three-dimensional machine tools using the previously-shown components, this process comprises the steps of:
- if available, importing a mathematical model of the mechanical part to be supported, through the aforesaid tooling designing means;
- defining, manually or on the imported mathematical model, depending on drawing prescriptions or known experiences, a list of contact points on the mechanical part to be supported and the type of the supports (i.e.: sphere, plain, cylinder, shaped surface, etc.);
- defining and arranging, through the aforesaid tooling designing means and the module library stored therein, the fine adjustable columns 3 on the mobile transverse beams 2 in suitable points of the reconfigurable base frame 1;
- defining customisation groups of the supporting terminal groups to be provided on each fine adjustable column 3, composing them from the aforesaid library of available modules through the tooling designing means;
- defining and arranging a supporting terminal module 5 for each previously-defined contact point, and aiding through the tooling designing means to allow the contact point to coincide with the supporting point defined by the tooling. Alternatively, defining through the tooling designing means, starting from the supporting terminal module 5, a composition of the fine adjustable column 3 and of the position of adjustable modules up to the engaging basic point on the mobile transverse beam 2. Alternatively, producing, through the tooling designing means, a series of alternative solutions among which to manually perform a choice. Alternatively, producing, through the tooling designing means, a series of alternative solutions that are manually modifiable depending on operational demands;
- producing, through the tooling designing means, a documentation which allows a machine tool operator to assemble the supporting tooling by putting the supporting terminal modules 5 in their nominal position within a first level of accuracy (i.e.: in the range between -1 and +1 mm);
- producing, through the tooling designing means, depending on the previously-computed positions of the supporting terminal modules 5, their dimensional characteristics and knowledge of the dimensions of the adjustment terminal modules 6, a list of positioning points for the machine tool so that, if the fine adjustable columns 3 are positioned completed with the supporting terminal groups in which the supporting terminal modules 5 have been replaced by the adjustment terminal modules 6, when these latter ones are replaced by the supporting terminal modules 5, these latter ones will be in the position defined by the definition of the contact points;
- positioning the machine tool using the sequence of previously-computed points, and replacing the supporting terminal module 5 with the adjustment terminal module 6:
- placing, on the toolbox column of the machine tool, in substitution or contextually to the conventional measuring head, an adjustment measuring head 7; this latter one is placed to compute and/or to show on a suitable display 8 compatible with the operational situation, the deviation of the characteristic measure point 6c of the reference module 6 from a nominal zero position shown by the adjustment measuring head 7;
- positioning, through manual adjustment of the fine adjustable modules 3a and 3b provided on the fine adjustable column 3, depending on the indication of deviation from zero provided by the previous step, the adjustment terminal module 6 till the desired minimum error (preferably within the range between -20 and +20 microns) is obtained;
- inserting, in place of the adjustment terminal module 6, the supporting terminal module 5 previously defined by the tooling designing means and completing the support with possible locking terminal groups.

## Claims

1. System for designing, manufacturing and adjusting tooling for supporting mechanical parts on three-dimensional machine tools, **characterised in that** it comprises:
- tooling designing means;
- a supporting mechanic modular system;
- at least one adjustment terminal module (6); and
- at least one adjustment measuring head (7).

2. System according to claim 1, **characterised in that** said tooling designing means are adapted to perform the following steps:
- importing mathematical models representing said mechanic part to be supported;
- defining a list of contact points on said mechanic part to be supported;
- defining, from a library of available modules stored in said tooling designing means, a list of modules to be used to assemble said supporting tooling;
- computing a list of supporting terminal points;
- computing positioning coordinates of modules of said supporting mechanic modular system to allow every one of said supporting terminal points to correspond to said contact point;
- computing a position with respect to a characteristic reference point (5d) of said supporting terminal module (5);
- computing coordinates of a characteristic measure point (6c) of said adjustment terminal module (6);
- producing a report comprising:
- a list of said modules necessary for assembling said supporting tooling;
- a position of each of said modules in said supporting tooling;
- indication of positioning heights of an adjustment measuring head (7); and
- an assembling sequence of said modules.

3. System according to claim 1, **characterised in that** said supporting mechanic modular system is composed of:
- a reconfigurable base frame (1);
- at least two mobile transverse beams (2) disposed on said reconfigurable base frame (1) sliding along a direction parallel to an X axis, said X axis being parallel to a main length of said reconfigurable base frame (1);
- at least three fine adjustable columns (3) sliding on said mobile transverse beam (2) along a direction parallel to an Y axis, said Y axis being orthogonal to said X axis and a plan defined by said X and Y axes parallel to a plan defined by a length and a width of said reconfigurable base frame (1), and with an height adjustable along a direction parallel to a Z axis, said Z axis being simultaneously orthogonal to said X axis and to said Y axis; said fine adjustable column (3) provided with a column terminal head (3c) in one of its ends and said fine adjustable column (3) provided with at least two fine adjustable modules (3a, 3b) to adjust a position of said column terminal head (3c) along three directions parallel respectively to said X, Y and Z axes;
- a plurality of heads positioned on said column terminal head (3c) adapted to engage a supporting terminal group and/or a locking terminal group;
- a plurality of height changing adjustable modules to change an height of said fine adjustable column (3); and
- a plurality of modules composing said supporting terminal group.

4. System according to claim 3, **characterised in that** said reconfigurable base frame (1) is adapted to support said transverse beams (2) and said fine adjustable columns (3).

5. System according to claim 3, **characterised in that** said reconfigurable base frame (1) is a trestle composed of aluminum bars with sliding rails for said mobile transverse beams (2).

6. System according to claim 3, **characterised in that** said reconfigurable base frame (1) is a plan with a grid of holes spaced with a constant pitch.

7. System according to claim 3, **characterised in that** said reconfigurable base frame (1) is a smooth plan with a reference grid.

8. System according to claim 3, **characterised in that** said mobile transverse beam (2) is adapted to support said fine adjustable column (3) being a position of said beam (2) as regards said frame (1) able to be sensed by an optic and/or electric and/or electro-optic and/or magnetic transducer system and said beam (2) being able to be locked as regards said frame (1) by locking means.

9. System according to claim 3, **characterised in that** said plurality of modules composing said supporting terminal group comprises at least one reference universal block (4).

10. System according to claim 2 or 3, **characterised in that** said plurality of modules composing said supporting terminal group comprises at least one supporting terminal module (5).

11. System according to claim 9, **characterised in that** said reference universal block (4) is provided with at least one cylindrical hole (4b) provided with fixing mechanic means (4d).

12. System according to claim 2 or 9, **characterised in that** said reference universal block (4) is adapted to house said supporting terminal module (5) fitting in said cylindrical hole (4b).

13. System according to claim 1 or 9, **characterised in that** said reference universal block (4) is adapted to house said adjustment terminal module (6) fitting in said cylindrical hole (4b).

14. System according to claim 9, **characterised in that** in said reference universal block (4) a characteristic reference point is defined (4a) by an intersection between said cylindrical hole (4b) and a surface (4c) of said reference universal block (4).

15. System according to claim 2, **characterised in that** said supporting terminal module (5) is provided with a radial reference cylinder (5a) and with an axial reference abutment (5b).

16. System according to claim 2 or 15, **characterised in that** in said supporting terminal module (5) said characteristic reference point is defined (5d) by an intersection between an axis of said radial reference cylinder (5a) and a plan defined by said axial reference abutment (5b).

17. System according to claim 2, 11, 14 or 16, **characterised in that** said supporting terminal module (5) is provided with mechanic means (5e) adapted to work with said fixing mechanic means (4d) of said cylindrical hole (4b) and to make said characteristic reference point (4a) of said reference universal block (4) coincide with said characteristic reference point (5d) of said supporting terminal module (5).

18. System according to claim 2, **characterised in that** said supporting terminal module (5) is provided with a characteristic measure point (5c).

19. System according to claim 2 or 3, **characterised in that** said locking terminal group comprises at least one module adapted to stop said mechanic part to be supported on said supporting terminal module (5).

20. System according to claim 1, **characterised in that** said adjustment terminal module (6) is equipped with mechanical and/or geometric and/or optical and/or electric characteristics to facilitate a measure of its static position as regards said triad of orthogonal reference axes X, Y and Z through said adjustment measuring head (7).

21. System according to claim 1, **characterised in that** said adjustment terminal module (6) is provided with a radial reference cylinder (6a) and with an axial reference abutment (6b).

22. System according to claim 1 or 21, **characterised in that** said adjustment terminal module (6) defines a characteristic reference point (6d) through an intersection between an axis of said radial reference cylinder (6a) and a plan defined by said an axial reference abutment (6b).

23. System according to claim 1, 11, 14 or 22, **characterised in that** said adjustment terminal module (6) is provided with mechanic means (6e) adapted to work with said fixing mechanic means (4d) of said cylindrical hole (4b) and to make said characteristic reference point (4a) of said reference universal block (4) coincide with said characteristic reference point (6d) of said adjustment terminal module (6).

24. System according to claim 1 or 2, **characterised in that** said adjustment terminal module (6) is provided with said characteristic measure point (6c), a position thereof being adapted to be sensed by said adjustment measuring head (7).

25. System according to claim 1 or 2, **characterised in that** said adjustment measuring head (7) is placed on a toolhead fixed to said machine tool and is provided with at least one optic and/or electric and/or mechanical sensor to measure a deviation of said characteristic measure point (6c) of said adjustment terminal module (6) as regards a reference point computed by said tooling designing means.

26. System according to claim 1 or 2, **characterised in that** said adjustment measuring head (7) is provided with at least two television cameras (7a) having respective optic axes that are arranged orthogonally, said television cameras being adapted to transmit an image of said characteristic measure point (6c) on a display (8).

27. Process for designing, manufacturing and adjusting tooling for supporting mechanical parts on three-dimensional machine tools, **characterised in that** it comprises the steps of:
- importing said mathematical model, through said tooling designing means;
- defining, manually or on said imported mathematical model, a list of said contact points of said mechanic part to be supported and shapes of said modules to be used;
- defining and arranging, from said module library stored in said tooling designing means, said fine adjustable columns (3) on said mobile transverse beams (2) disposed on said reconfigurable base frame (1);
- defining personalization groups of said supporting terminal groups to be placed on each of said fine adjustable columns (3), composing them from said module library;
- defining and arranging said supporting terminal module (5) for each contact point of said mechanic part to be supported and aiding through said tooling designing means to allow each of said contact points to coincide with its respective supporting point defined on said imported mathematical model, or defining through said tooling designing means, starting from said supporting terminal module (5), a composition of said fine adjustable column (3) and of a position of said adjustable modules till an engaging basic point of said fine adjustable column (3) on said mobile transverse beam (2), or producing through said tooling designing means a series of alternative solutions among which to manually perform a choice; alternatively, producing, through said tooling designing means, a series of alternative solutions that are able to be manually modified depending on operational demands;
- producing, through said tooling designing means, a documentation which allows an operator of said machine tool to assemble said tooling putting said supporting terminal modules (5) in a nominal position within a first level of accuracy, preferably within a range between -1 and +1 mm;
- producing, through said tooling designing means, depending on positions, dimensional characteristics of said supporting terminal modules (5) and dimensions of said adjustment terminal modules (6), a list of positioning points of said machine tool;
- positioning, in said positioning points, said machine tool and replacing said supporting terminal module (5) with said adjustment terminal module (6);
- placing, on said toolbox column of said machine tool, in substitution or contextually to a conventional measuring head, said adjustment measuring head (7) being said head (7) adapted to calculate and/or to show on said display (8) a deviation of said characteristic measure point (6c) from a nominal zero position shown by said adjustment measuring head (7);
- positioning, by manual regulation of said fine adjustable modules (3a, 3b), depending on an indication of deviation from zero provided by the previous step, said adjustment terminal module (6) till a desired minimum error preferably within a range between -20 and +20 micron is obtained;
- replacing said adjustment terminal module (6) with said supporting terminal module (5) and completing said support with possible locking terminal groups.
